(19) **Europäisches Patentamt / European Patent Office / Office européen des brevets**

(11) **EP 3 997 614 B1**

(12) **EUROPÄISCHE PATENTSCHRIFT**

(45) Veröffentlichungstag und Bekanntmachung des Hinweises auf die Patenterteilung:
**07.01.2026  Patentblatt 2026/02**

(21) Anmeldenummer: **20735321.0**

(22) Anmeldetag: **25.06.2020**

(51) Internationale Patentklassifikation (IPC):
**G06F 18/22** *(2023.01)*      **G06V 20/58** *(2022.01)*

(52) Gemeinsame Patentklassifikation (CPC):
**G06V 20/58; G06F 18/22**

(86) Internationale Anmeldenummer:
**PCT/EP2020/067964**

(87) Internationale Veröffentlichungsnummer:
**WO 2021/004810 (14.01.2021 Gazette 2021/02)**

(54) **VERFAHREN UND VORRICHTUNG ZUM KAMERABASIERTEN BESTIMMEN EINES ABSTANDES EINES BEWEGTEN OBJEKTES IM UMFELD EINES KRAFTFAHRZEUGS**

METHOD AND DEVICE FOR CAMERA-BASED DETERMINATION OF A DISTANCE OF A MOVING OBJECT IN THE ENVIRONMENT OF A MOTOR VEHICLE

PROCÉDÉ ET DISPOSITIF POUR LA DÉTERMINATION PAR CAMÉRA D'UNE DISTANCE D'UN OBJET EN MOUVEMENT DANS L'ENVIRONNEMENT D'UN VÉHICULE À MOTEUR

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **11.07.2019  DE 102019210300**

(43) Veröffentlichungstag der Anmeldung:
**18.05.2022  Patentblatt 2022/20**

(73) Patentinhaber: **VOLKSWAGEN AKTIENGESELLSCHAFT**
**38440 Wolfsburg (DE)**

(72) Erfinder:
• VERKIN, Julian
**16761 Hennigsdorf (DE)**
• DREYER, Robert
**12163 Berlin (DE)**

(56) Entgegenhaltungen:
**EP-A1- 2 568 313          CN-B- 106 197 382**
**DE-A1- 102011 076 112   DE-A1- 102015 112 289**

**Beschreibung**

Die Erfindung betrifft ein Verfahren und eine Vorrichtung zum kamerabasierten Bestimmen eines Abstandes eines bewegten Objektes im Umfeld eines Kraftfahrzeugs. Ferner betrifft die Erfindung ein Kraftfahrzeug.

In modernen Kraftfahrzeugen werden Kameras eingesetzt, um ein Umfeld des Kraftfahrzeugs zu erfassen. Für eine räumliche Erfassung werden hierbei mehrere Kameras benötigt, um ein stereoskopisches Abbild des Umfeldes zu erzeugen.

Aus der CN 106197382 B ist ein Verfahren zum dynamischen Bestimmen eines Abstands eines Ziels mit einer Fahrzeugeinzelkamera bekannt. Ausgehend von mehreren mittels der Fahrzeugeinzelkamera erfassten Einzelbildern wird eine Bildgröße eines Objektes in den Einzelbildern bestimmt. Über die bestimmten Bildgrößen und eine über eine Fahrzeuggeschwindigkeit berechnete Wegstrecke wird ein Abstand zum Objekt bestimmt. Das Verfahren kann jedoch nur auf unbewegte Objekte angewendet werden.

Der Erfindung liegt die Aufgabe zu Grunde, ein Verfahren und eine Vorrichtung zum kamerabasierten Bestimmen eines Abstandes eines bewegten Objektes im Umfeld eines Kraftfahrzeugs zu schaffen.

Die Aufgabe wird erfindungsgemäß durch ein Verfahren mit den Merkmalen des Patentanspruchs 1 und eine Vorrichtung mit den Merkmalen des Patentanspruchs 7 gelöst. Vorteilhafte Ausgestaltungen der Erfindung ergeben sich aus den Unteransprüchen.

Insbesondere wird ein Verfahren zum kamerabasierten Bestimmen eines Abstandes eines bewegten Objektes im Umfeld eines Kraftfahrzeugs zur Verfügung gestellt, wobei eine erste Umfeldabbildung des Umfeldes zu einem ersten Zeitpunkt und eine zweite Umfeldabbildung des Umfelds zu einem nachfolgenden zweiten Zeitpunkt mittels einer Kamera erfasst werden, wobei das bewegte Objekt in den erfassten Umfeldabbildungen erkannt wird, und wobei mindestens ein unbewegtes Objekt in den erfassten Umfeldabbildungen erkannt und in Abhängigkeit einer ausgezeichneten geometrischen Beziehung relativ zum bewegten Objekt in der ersten Umfeldabbildung ausgewählt wird, wobei ein Bildgrößenverhältnis zwischen einer Bildgröße des bewegten Objekts und einer Bildgröße des unbewegten Objekts in der ersten Umfeldabbildung bestimmt wird, wobei eine Bildgröße des unbewegten Objektes in der zweiten Umfeldabbildung bestimmt wird, wobei Abstände des unbewegten Objektes zum ersten Zeitpunkt und zum zweiten Zeitpunkt und eine Objektgröße des unbewegten Objektes auf Grundlage der bestimmten Bildgrößen des unbewegten Objektes und einer Fahrzeuggeschwindigkeit bestimmt werden, und wobei Abstände des bewegten Objektes zum ersten Zeitpunkt und zum zweiten Zeitpunkt auf Grundlage des bestimmten Bildgrößenverhältnisses, der bestimmten Abstände und der bestimmten Objektgröße des unbewegten Objektes bestimmt und bereitgestellt werden.

Ferner wird eine Vorrichtung zum kamerabasierten Bestimmen eines Abstandes eines bewegten Objektes im Umfeld eines Kraftfahrzeugs geschaffen, umfassend eine Kamera zum Erfassen des Umfeldes, und eine Auswerteeinrichtung, wobei die Kamera derart ausgebildet ist, eine erste Umfeldabbildung des Umfeldes zu einem ersten Zeitpunkt und eine zweite Umfeldabbildung des Umfelds zu einem nachfolgenden zweiten Zeitpunkt zu erfassen, und wobei die Auswerteeinrichtung derart ausgebildet ist, das bewegte Objekt in den erfassten Umfeldabbildungen zu erkennen und ferner mindestens ein unbewegtes Objekt in den erfassten Umfeldabbildungen zu erkennen und in Abhängigkeit einer ausgezeichneten geometrischen Beziehung relativ zum bewegten Objekt in der ersten Umfeldabbildung auszuwählen, ein Bildgrößenverhältnis zwischen einer Bildgröße des bewegten Objekts und einer Bildgröße des unbewegten Objekts in der ersten Umfeldabbildung zu bestimmen, und ferner eine Bildgröße des unbewegten Objektes in der zweiten Umfeldabbildung zu bestimmen, Abstände des unbewegten Objektes zum ersten Zeitpunkt und zum zweiten Zeitpunkt und eine Objektgröße des unbewegten Objektes auf Grundlage der bestimmten Bildgrößen des unbewegten Objektes und einer Fahrzeuggeschwindigkeit zu bestimmen, und Abstände des bewegten Objektes zum ersten Zeitpunkt und zum zweiten Zeitpunkt auf Grundlage des bestimmten Bildgrößenverhältnisses, der bestimmten Abstände und der bestimmten Objektgröße des unbewegten Objektes zu bestimmen und bereitzustellen.

Das Verfahren und die Vorrichtung ermöglichen es, einen Abstand eines bewegten Objektes ausschließlich auf Grundlage von zwei von einer einzelnen Kamera erfassten Umfeldabbildungen zu bestimmen, welche zu aufeinanderfolgenden Zeitpunkten erfasst wurden. Es wird hierbei davon ausgegangen, dass die Kamera, insbesondere zusammen mit einem Kraftfahrzeug, zwischen dem ersten Zeitpunkt und dem zweiten Zeitpunkt relativ zum Umfeld bewegt wird. In den erfassten Umfeldabbildungen wird das bewegte Objekt erkannt, welches beispielsweise ein vorausfahrendes Kraftfahrzeug ist. Ferner wird mindestens ein unbewegtes Objekt in den erfassten Umfeldabbildungen erkannt und in Abhängigkeit einer ausgezeichneten geometrischen Beziehung relativ zum bewegten Objekt in der ersten Umfeldabbildung ausgewählt. Das Erkennen und Auswählen umfasst hierbei insbesondere das Erkennen von mehreren unbewegten Objekten im Umfeld des Kraftfahrzeugs. Nachdem mehrere unbewegte Objekte im Umfeld erkannt wurden, wird ein geeignetes unbewegtes Objekt in Abhängigkeit einer ausgezeichneten geometrischen Beziehung relativ zum bewegten Objekt in der ersten Umfeldabbildung ausgewählt.

Mit dem ausgewählten unbewegten Objekt werden die nachfolgenden Verfahrensschritte durchgeführt. Es wird ein Bildgrößenverhältnis zwischen einer Bildgröße, das heißt einer Anzahl von Bildelementen, beispielsweise in horizontaler oder in vertikaler Richtung (d.h. mit Bezug auf eine Breite oder Höhe) des bewegten Objekts, und einer Bildgröße des unbewegten Objekts in der ersten Umfeldabbildung bestimmt. Hierbei wird insbesondere eine Bilddimension (d.h. eine in Bildelementen gemessene Breite oder eine in Bildelementen gemessene Höhe) für sich betrachtet. Es kann jedoch auch vorgesehen sein, dass beide Bilddimensionen betrachtet werden und beispielsweise ein Mittelwert eines jeweils für eine Breite und eine Höhe bestimmten Bildgrößenverhältnisses gebildet wird. Die Anzahl der Bildelemente kann bei bekannter Größe eines Bildelements auch in eine entsprechende physikalische Größe (Größe der Abbildung auf dem Kamerasensor) umgerechnet werden. Anschließend wird auf gleiche Weise eine Bildgröße des unbewegten Objektes in der zweiten Umfeldabbildung bestimmt.

Auf Grundlage der bestimmten Bildgrößen des unbewegten Objektes und einer Fahrzeuggeschwindigkeit, die beispielsweise mittels der Auswerteeinrichtung von einer Fahrzeugodometrie des Kraftfahrzeugs abgefragt wird, werden Abstände des unbewegten Objektes zum Kraftfahrzeug bzw. zur Kamera zum ersten Zeitpunkt und zum zweiten Zeitpunkt sowie eine Objektgröße des unbewegten Objektes bestimmt. Im letzten Schritt werden Abstände des bewegten Objektes zum ersten Zeitpunkt und zum zweiten Zeitpunkt auf Grundlage des bestimmten Bildgrößenverhältnisses, der bestimmten Abstände des unbewegten Objektes und der bestimmten Objektgröße des unbewegten Objektes bestimmt und bereitgestellt.

Anders ausgedrückt wird das ausgewählte unbewegte Objekt als Referenzobjekt verwendet, für das Abstände zur Kamera bzw. zum Kraftfahrzeug zu den beiden Zeitpunkten mit Hilfe bekannter Abbildungsbedingungen der Kamera und einer bekannten zurückgelegten Wegstrecke bestimmt werden. Da das unbewegte Objekt in Abhängigkeit einer ausgezeichneten geometrischen Beziehung relativ zum bewegten Objekt in der ersten Umfeldabbildung ausgewählt wurde, können aus dem bestimmten Bildgrößenverhältnis des bewegten Objektes und des unbewegten Objektes in der ersten Umfeldabbildung und den bestimmten Abständen des unbewegten Objektes unter Berücksichtigung der ausgezeichneten geometrischen Beziehung die entsprechenden Abstände des bewegten Objektes zum ersten Zeitpunkt und zum zweiten Zeitpunkt bestimmt werden.

Der Vorteil der Erfindung ist, dass ein Abstand zu einem bewegten Objekt mittels einer einzelnen Kamera bestimmt werden kann. Da nur eine einzelne Kamera benötigt wird, können Kosten und Bauraum eingespart werden.

Die Kamera ist insbesondere eine Monokamera bzw. Einzelkamera, das heißt eine Kamera, die das Umfeld aus lediglich einer Richtung bzw. mit einem einzigen Objektiv erfasst. Die Kamera ist hierbei insbesondere an einem Kraftfahrzeug angeordnet und erfasst einen Bereich vor oder hinter dem Kraftfahrzeug. Die Kamera wird während des Erfassens der ersten Umfeldabbildung und der zweiten Umfeldabbildung zusammen mit dem Kraftfahrzeug bewegt, sodass sich zumindest ein Abstand zwischen dem Kraftfahrzeug bzw. der Kamera und dem unbewegten Objekt verändert und sich zumindest eine Bildgröße des unbewegten Objekts verändert. Erfasst die Kamera einen Bereich hinter dem Kraftfahrzeug, so kann hierdurch beispielsweise eine Rückwärtsfahrt überwacht werden oder vor einem Überholvorgang ein von hinten herannahendes anderes Kraftfahrzeug erkannt werden.

Das Erkennen des bewegten Objektes und des unbewegten Objektes in den erfassten Umfeldabbildungen erfolgt mittels an sich bekannter Verfahren der Mustererkennung. Hierbei können beispielsweise Verfahren des Maschinenlernens zum Einsatz kommen. Es kann vorgesehen sein, dass hierbei eine Vorgabe gemacht wird, welche Art von Objekten in den erfassten Umfeldabbildungen erkannt bzw. gesucht werden sollen. Beispielsweise kann die Vorgabe gemacht werden, dass das bewegte Objekt ein vorausfahrendes Kraftfahrzeug ist.

Das Auswählen des unbewegten Objektes in Abhängigkeit einer ausgezeichneten geometrischen Beziehung relativ zum bewegten Objekt in der ersten Umfeldabbildung soll insbesondere das Auswählen eines unbewegten Objektes umfassen, welches relativ zum bewegten Objekt günstig angeordnet ist. Die ausgezeichnete geometrische Beziehung bezeichnet hierbei die Bedingung, dass das unbewegte Objekt auf Grund einer Nähe zum bewegten Objekt in unmittelbarer Nachbarschaft zu diesem angeordnet ist oder das bewegte Objekt zumindest teilweise berührt. Dahinter liegt die Überlegung, dass bei unmittelbarer Nähe oder bei Berührung eine Größe des bewegten Objektes und des unbewegten Objektes zumindest in dieser unmittelbaren Nachbarschaft oder an Berührungspunkten vergleichbar ist, sodass von Abmessungen des unbewegten Objektes auf Abmessungen des bewegten Objektes geschlossen werden kann. Bei einer Berührung oder einer unmittelbaren Nähe ist insbesondere ein Abstand, also eine Entfernung zur Kamera, des bewegten und unbewegten Objektes der gleiche. Besonders geeignet ist hierfür ein stets vorhandener Berührpunkt des Kraftfahrzeugs mit einer Fahrbahn. Aufgrund der ausgezeichneten geometrischen Beziehung sind die bestimmten Bildgrößen und hierüber auch die realen Größen der Objekte daher zumindest teilweise direkt miteinander vergleichbar.

Die Verfahrensschritte zum Bestimmen der Abstände des bewegten Objektes werden insbesondere mittels der Auswerteeinrichtung durchgeführt. Teile der Auswerteeinrichtung können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) ausgebildet sind.

Es kann vorgesehen sein, dass das Verfahren zyklisch wiederholt wird. Insbesondere kann das Verfahren für Paare von jeweils zu unterschiedlichen, insbesondere benachbarten, Zeitpunkten erfassten Umfeldabbildungen wiederholt werden. Auf diese Weise kann wiederholt ein Abstand für das bewegte Objekt bestimmt werden. Bei wiederholter Durchführung kann insbesondere über einen veränderten Abstand (und eine hieraus ermittelbare Relativgeschwindigkeit) eine Änderung der Relativgeschwindigkeit festgestellt werden und damit in Abhängigkeit einer Geschwindigkeit bzw. Geschwindigkeitsänderung des Kraftfahrzeugs auf ein Bremsen oder Beschleunigen des bewegten Objekts (z.B. eines vorausfahrenden Fahrzeugs) geschlossen werden, worauf ein Fahrerassistenzsystem entsprechend reagieren kann.

Es kann vorgesehen sein, dass das Verfahren für mehrere bewegte Objekte auf Grundlage der ersten erfassten Umfeldabbildung und der zweiten erfassten Umfeldabbildung ausgeführt wird. Hierbei werden die Verfahrensschritte für jedes der bewegten Objekte separat durchgeführt. Es kann jedoch sein, dass hierbei das gleiche ausgewählte unbewegte Objekt für mehrere bewegte Objekte verwendet wird.

In einer Ausführungsform ist vorgesehen, dass eine Objektgröße des bewegten Objektes auf Grundlage des bestimmten Bildgrößenverhältnisses und der bestimmten Objektgröße des unbewegten Objektes bestimmt wird, wobei ein weiterer Abstand des bewegten Objektes zu einem späteren weiteren Zeitpunkt ausschließlich auf Grundlage der bestimmten Objektgröße und einer in einer erfassten weiteren Umfeldabbildung bestimmten Bildgröße des bewegten Objektes bestimmt wird. Hierdurch kann nach einmaligem Bestimmen der Objektgröße des bewegten Objektes in später erfassten weiteren Abbildungen ein Abstand zum bewegten Objekt bestimmt werden. Nach dem einmaligen Bestimmen der Objektgröße können hierdurch Ressourcen eingespart werden, da die restlichen Verfahrensschritte nicht mehr durchgeführt werden müssen.

In einer Ausführungsform ist vorgesehen, dass die Abstände und/oder die Objektgröße des unbewegten Objektes auf Grundlage von bekannten optischen Eigenschaften der Kamera unter Annahme einer Fixfokusoptik mit einem bekannten Bildabstand bestimmt werden. Ein Bestimmen der Abstände und der Objektgröße des unbewegten Objektes kann hierdurch auf besonders einfache und rechenaufwandsarme Weise durchgeführt werden.

Das gleiche Prinzip kann auch auf Kameras mit einstellbarer Fokussierung angewendet werden, wobei die Bildabstände (manchmal auch als Bildweiten bezeichnet) hierzu bestimmt werden bzw. aus erfassten Kameradaten ermittelt werden.

In einer Ausführungsform ist vorgesehen, dass die ausgezeichnete geometrische Beziehung durch mindestens einen Berührungspunkt von Bildelementen des bewegten Objektes und Bildelementen des unbewegten Objektes in der ersten Umfeldabbildung festgelegt ist oder festgelegt wird. Ist das bewegte Objekt beispielsweise ein vorausfahrendes Kraftfahrzeug, so können Berührungspunkte des vorausfahrenden Kraftfahrzeugs mit einer Fahrbahnoberfläche, beispielsweise Kontaktlinien von Hinterrädern mit der Fahrbahnoberfläche, in der ersten Umfeldabbildung identifiziert und zum Festlegen der geometrischen Beziehung verwendet werden. Anders ausgedrückt kann an diesen Punkten davon ausgegangen werden, dass die realen Abmessungen an den Berührungspunkten zwischen dem Kraftfahrzeug und der Fahrbahn gleich sind, da diese diesbezüglich den gleichen Abstand zur Kamera aufweisen. Als unbewegtes Objekt kann beispielsweise eine an diesen Berührungspunkten über Fahrbahnmarkierungen abgeleitete bzw. bestimmte oder abgeschätzte Fahrspurbreite einer Fahrbahn verwendet werden.

In einer Ausführungsform ist vorgesehen, dass eine Relativgeschwindigkeit des bewegten Objektes zum Kraftfahrzeug auf Grundlage der bestimmten Abstände des bewegten Objektes und einer Zeitdifferenz zwischen dem ersten Zeitpunkt und dem zweiten Zeitpunkt bestimmt und bereitgestellt wird. Hierdurch kann zusätzlich eine Zustandsinformation eines dynamischen Zustands des bewegten Objektes zur Verfügung gestellt werden.

In einer Weiterbildung ist vorgesehen, dass eine Absolutgeschwindigkeit des bewegten Objektes bestimmt und bereitgestellt wird, wobei hierzu die bestimmte Relativgeschwindigkeit und eine Fahrzeuggeschwindigkeit des Kraftfahrzeugs zusammenaddiert werden. Die Fahrzeuggeschwindigkeit des Kraftfahrzeugs kann beispielsweise mittels der Auswerteeinrichtung bei einer Fahrzeugodometrie abgefragt werden. Hierdurch kann zusätzlich auch eine absolute Größe für den dynamischen Zustand des bewegten Objektes zur Verfügung gestellt werden. Ferner kann aus mehreren für aufeinanderfolgende Zeitpunkte bestimmte Absolutgeschwindigkeiten eine Beschleunigung oder ein Verzögern des bewegten Objektes berechnet werden.

Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Es wird weiter ein Kraftfahrzeug geschaffen, umfassend mindestens eine Vorrichtung nach einer beliebigen der beschriebenen Ausführungsformen.

Nachfolgend wird die Erfindung anhand bevorzugter Ausführungsbeispiele unter Bezugnahme auf die Figuren näher erläutert. Hierbei zeigen:

Fig. 1      eine schematische Darstellung einer Ausführungsform der Vorrichtung zum kamerabasierten Bestimmen eines Abstandes eines bewegten Objektes im Umfeld eines Kraftfahrzeugs;

Fig. 2      eine schematische Darstellung eines beispielhaften Umfeldes zum ersten Zeitpunkt und zum zweiten Zeitpunkt zur Verdeutlichung der Erfindung.

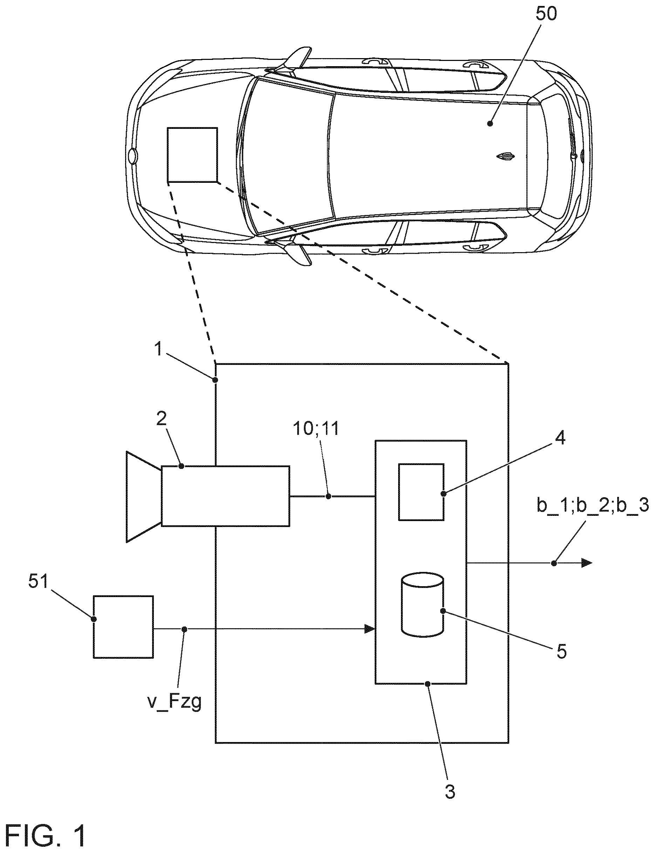

In Fig. 1 ist eine schematische Darstellung einer Ausführungsform der Vorrichtung 1 zum kamerabasierten Bestimmen eines Abstandes eines bewegten Objektes im Umfeld eines Kraftfahrzeugs 50 gezeigt. Die Vorrichtung 1 ist in dem Kraftfahrzeug 50 angeordnet. Die Vorrichtung 1 umfasst eine einzelne Kamera 2 und eine Auswerteeinrichtung 3.

Teile der Auswerteeinrichtung 3 können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) ausgebildet sind. Die Auswertevorrichtung 3 umfasst insbesondere eine Recheneinrichtung 4, z.B. in Form eines Mikroprozessors, und einen Speicher 5, in dem die Recheneinrichtung 4 Rechenoperationen durchführen kann.

Die Kamera 2 erfasst eine erste Umfeldabbildung 10 des Umfeldes zu einem ersten Zeitpunkt und eine zweite Umfeldabbildung 11 des Umfelds zu einem nachfolgenden zweiten Zeitpunkt und führt die erfassten Umfeldabbildungen 10, 11 der Auswerteeinrichtung 3 zu. Zwischen den beiden Zeitpunkten wird das Kraftfahrzeug 50 und zusammen hiermit die Kamera 2 bewegt. Es kann hierbei insbesondere vorgesehen sein, dass die Kamera 2 einen Strom aus Umfeldabbildungen in Form eines Videos erfasst und die erste Umfeldabbildung 10 und die zweite Umfeldabbildung 11 als Einzelbilder aus dem Videostrom entnommen werden.

Die Auswerteeinrichtung 3 erkennt das bewegte Objekt, von dem der Abstand bestimmt werden soll, in den erfassten Umfeldabbildungen 10, 11. Das bewegte Objekt kann beispielsweise ein vorausfahrendes Kraftfahrzeug sein. Ferner erkennt die Auswerteeinrichtung 3 unbewegte Objekte in den erfassten Umfeldabbildungen 10, 11 und wählt eines dieser unbewegten Objekte in Abhängigkeit einer ausgezeichneten geometrischen Beziehung relativ zum bewegten Objekt in der ersten Umfeldabbildung 10 aus. Insbesondere kann die ausgezeichnete geometrische Beziehung eine gleiche Bildebene in der ersten Umfeldabbildung 11, das heißt ein gleicher Abstand bzw. eine gleiche Entfernung zur Kamera 2 zumindest von Teilen des bewegten Objektes und des unbewegten Objektes sein. Beispielsweise können Bildelemente eines vorausfahrenden Kraftfahrzeugs, beispielsweise von Hinterreifen, an Bildelemente des unbewegten Objektes, beispielsweise eine Fahrbahn oder eine Fahrbahnmarkierung, angrenzen. Aus dem Kontext (vorausfahrendes Kraftfahrzeug + Straße + Hinterreifen) kann dann geschlossen werden, dass das bewegte Objekt und das unbewegte Objekt in dieser Bildebene, das heißt am Ort der aneinander angrenzenden Bildelemente, den gleichen Abstand zur Kamera bzw. zum Kraftfahrzeug 50 aufweisen.

Die Auswerteeinrichtung 3 bestimmt anschließend ein Bildgrößenverhältnis zwischen einer Bildgröße des bewegten Objekts und einer Bildgröße des unbewegten Objekts in der ersten Umfeldabbildung 10. Hierzu wird beispielsweise eine Anzahl von Bildelementen (Pixeln) in der Umfeldabbildung 10 für eine Höhe und/oder eine Breite der Objekte bestimmt. Aus den beiden Werten für die Anzahl der Bildelemente kann das Bildgrößenverhältnis der beiden Objekte zueinander in der ersten Umfeldabbildung 10 bestimmt werden.

In der zweiten Umfeldabbildung 11 bestimmt die Auswerteeinrichtung 3 ebenfalls eine Bildgröße des unbewegten Objektes.

Die Auswerteeinrichtung 3 bestimmt Abstände des unbewegten Objektes zum ersten Zeitpunkt und zum zweiten Zeitpunkt und eine Objektgröße des unbewegten Objektes auf Grundlage der jeweils in den Umfeldabbildungen 10, 11 bestimmten Bildgrößen des unbewegten Objektes und einer Fahrzeuggeschwindigkeit v_Fzg. Die Fahrzeuggeschwindigkeit v_Fzg wird der Auswerteeinrichtung 3 beispielsweise von einer Fahrzeugodometrie 51 des Kraftfahrzeugs 50 zugeführt und/oder von dieser abgefragt.

Im letzten Schritt bestimmt die Auswerteeinrichtung 3 Abstände b_1, b_2 des bewegten Objektes zum ersten Zeitpunkt und zum zweiten Zeitpunkt auf Grundlage des bestimmten Bildgrößenverhältnisses, der bestimmten Abstände und der bestimmten Objektgröße des unbewegten Objektes. Die bestimmten Abstände b_1, b_2 werden anschließend für eine Weiterverarbeitung bereitgestellt und hierzu ausgegeben, beispielsweise in Form eines digitalen Datenpakets.

Es kann vorgesehen sein, dass von der Auswerteeinrichtung 3 eine Objektgröße des bewegten Objektes auf Grundlage des bestimmten Bildgrößenverhältnisses und der bestimmten Objektgröße des unbewegten Objektes bestimmt wird, wobei ein weiterer Abstand b_3 des bewegten Objektes zu einem späteren weiteren Zeitpunkt ausschließlich auf Grundlage der bestimmten Objektgröße und einer in einer erfassten weiteren Umfeldabbildung bestimmten Bildgröße des bewegten Objektes bestimmt wird.

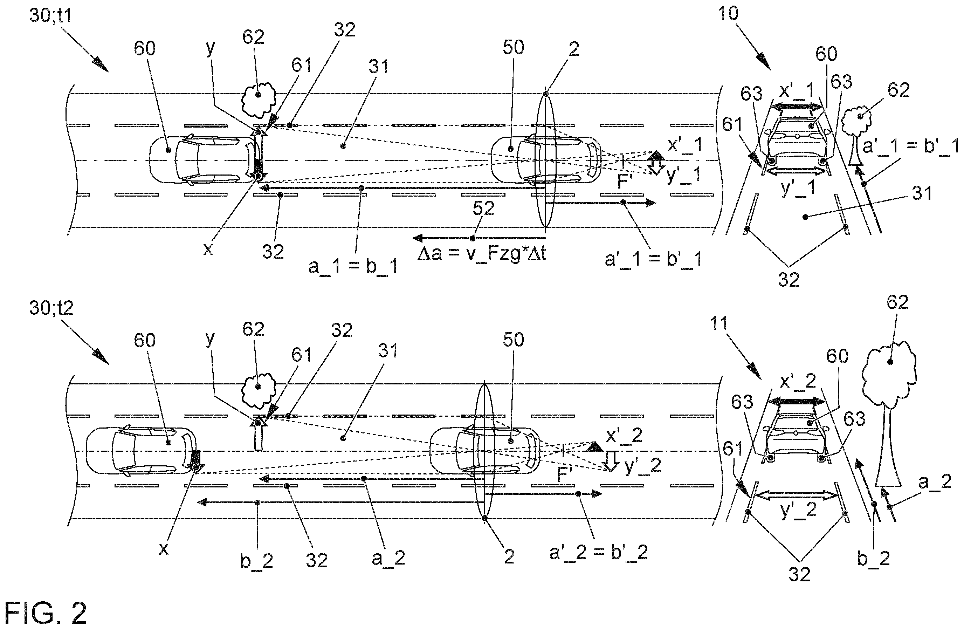

Fig. 2 zeigt eine schematische Darstellung eines beispielhaften Umfeldes 30 zum ersten Zeitpunkt t1 und zum nachfolgenden zweiten Zeitpunkt t2 zur Verdeutlichung der Erfindung. Auf der linken Seite der Fig. 2 ist hierbei jeweils eine Draufsicht auf das Umfeld 30 gezeigt, auf der rechten Seite der Fig. 2 ist jeweils eine schematische Darstellung der erfassten Umfeldabbildungen 10, 11 gezeigt.

Das Umfeld 30 des Kraftfahrzeugs 50 umfasst jeweils ein bewegtes Objekt 60 und ein unbewegtes Objekt 61. Das bewegte Objekt 60 hat eine Größe x und das unbewegte Objekt 61 eine Größe y, wobei sich die Größen x, y im gezeigten Beispiel auf eine Breite der Objekte 60, 61 mit Bezug auf eine Blickrichtung vom Kraftfahrzeug 50 aus beziehen. Der Übersichtlichkeit halber ist hierbei jeweils nur die halbe Breite in der Draufsicht gezeigt. Zusätzlich ist als unbewegtes Objekt noch ein Baum 62 dargestellt, dieser dient jedoch nur einer Verdeutlichung der Änderung der Bildgrößen. Prinzipiell könnte der Baum 62 jedoch auch als unbewegtes Objekt ausgewählt werden.

Nachfolgend werden einzelne Schritte des Verfahrens näher erläutert. Hierbei wird davon ausgegangen, dass die Kamera 2 in einer Mitte des Kraftfahrzeugs 50 angeordnet ist und die Kamera 2 das Umfeld 30 in Fahrtrichtung 52 erfasst.

Die nachfolgend beschriebenen Schritte werden in der Auswerteeinrichtung 3 (Fig. 1) durchgeführt.

In einem Schritt wird das bewegte Objekt 60, vorliegend ein vorausfahrendes Kraftfahrzeug, in der ersten erfassten Umfeldabbildung 10 erkannt. Eine Bildgröße x'_1 des bewegten Objektes 60 wird ermittelt, wobei hierzu eine Anzahl von Bildelementen, die das bewegte Objekt 60 in der ersten Umfeldabbildung 10 in einer Breite (alternativ in einer Höhe) einnimmt, bestimmt wird.

In einem nachfolgenden Schritt werden unbewegte Objekte in der ersten Umfeldabbildung 10 erkannt und ein unbewegtes Objekt 61 in der ersten Umfeldabbildung 10 auf Grundlage einer geeigneten geometrischen Beziehung zum bewegten Objekt 60 ausgewählt. Im gezeigten Beispiel ist die geometrische Beziehung beispielsweise ein bzw. mehrere Berührungspunkt(e) der Hinterräder 63 des vorausfahrenden Kraftfahrzeugs auf der Fahrspur 31. Als unbewegtes Objekt 61 wird im gezeigten Beispiel ein Teil der Fahrspur 31 gewählt bzw. deren Breite an dieser Position, welche über einen Abstand zugehöriger Fahrspurmarkierungen 32 definiert ist. An den Berührungspunkten können die Abmessungen des bewegten Objektes 60 und des unbewegten Objektes 61 in der ersten Umfeldabbildung 10 direkt miteinander verglichen werden, da ein Abstand a_1, b_1 zur Kamera 2 gleich ist. In diesem Schritt wird ferner eine Bildgröße y'_1 des unbewegten Objektes 61 bestimmt. Die Bildgröße wird über eine Anzahl von Bildelementen (Pixeln), die das unbewegte Objekt 61 in der ersten Umfeldabbildung 10 bezüglich einer Breite (alternativ Höhe) einnimmt, bestimmt. Die Anzahl der Bildelemente kann dann bei bekannter Größe eines Bildelements auch in eine entsprechende physikalische Größe (Größe der Abbildung auf dem Kamerasensor) umgerechnet werden.

Anschließend wird ein Bildgrößenverhältnis k zwischen dem bewegten Objekt 60 und dem unbewegten Objekte 61 in der ersten Umfeldabbildung 10 bestimmt. Dies erfolgt durch Vergleich der jeweils bestimmten Anzahl von Bildelementen:

$$k = x'\_1 / y'\_1$$

Nach einer bekannten Zeitdauer $\Delta t$ (Differenz zwischen dem ersten Zeitpunkt und dem zweiten Zeitpunkt) und einer bekannten zurückgelegten Strecke $\Delta a = v\_Fzg * \Delta t$ in Fahrtrichtung 52, werden die folgenden Schritte mittels der Auswerteeinrichtung 3 (Fig. 1) durchgeführt.

In der zweiten erfassten Umfeldabbildung 11 wird eine Bildgröße y'_2 des unbewegten Objektes 61, das heißt der Fahrspur bzw. deren Breite an der entsprechenden Position, bestimmt.

Anschließend werden die Abstände a_1, a_2 und eine Objektgröße y des unbewegten Objektes 61 bestimmt. Hierbei wird von einer Fixfokusoptik der Kamera 2 mit bekannten Eigenschaften ausgegangen.

Gemäß der geometrischen Optik gilt hierbei:

$$y'\_1 / y = a'\_1 / a\_1$$

und

$$y'\_2 / y = a'\_2 / a\_2$$

Über die Fahrzeuggeschwindigkeit v_Fzg des Kraftfahrzeugs 50 (bzw. der Kamera 2) kann mit bekanntem $\Delta t$ die zurückgelegte Strecke bestimmt werden:

$$\Delta a = v\_Fzg * \Delta t = a\_1 - a\_2$$

Hieraus und über eine Näherung einer Fixfokusoptik mit bekanntem Bildabstand:

$$a' = a'\_1 = b'\_1 \approx a'\_2 \approx b'\_2$$

folgt:

$$y'\_1 * a\_1 = y'\_2 (a\_1 - \Delta a)$$

Daraus ergibt sich nach Umstellen:

$$a\_1 = y'\_2 * \Delta a / (y'\_2 - y'\_1)$$

sowie

$$a\_2 = a\_1 - \Delta a$$

$$y = (a\_1 / a') * y'\_1 = (a\_2 / a') * y'\_2$$

In einem nachfolgenden Schritt berechnet die Auswerteeinrichtung 3 (Fig. 1) die Größe x des bewegten Objektes 60 über das bekannte Bildgrößenverhältnis k:

$$x = k * y$$

Hierüber können dann die Abstände b_1 und b_2 bestimmt werden:

$$b\_1 = a\_1$$

$$b\_2 = (x / x'\_2) * a'$$

Es kann vorgesehen sein, dass eine Relativgeschwindigkeit v_Obj_rel des bewegten Objektes 60 zum Kraftfahrzeug 50 auf Grundlage der bestimmten Abstände b_1, b_2 des bewegten Objektes 60 und der Zeitdifferenz Δt zwischen dem ersten Zeitpunkt t1 und dem zweiten Zeitpunkt t2 bestimmt und bereitgestellt wird:

$$v\_Obj\_rel = (b\_2 − b\_1) / \Delta t$$

Ferner kann weiterbildend vorgesehen sein, dass eine Absolutgeschwindigkeit v_Obj_abs des bewegten Objektes 60 bestimmt und bereitgestellt wird, wobei hierzu die bestimmte Relativgeschwindigkeit v_Obj_rel und eine Fahrzeuggeschwindigkeit v_Fzg des Kraftfahrzeugs 50 zusammenaddiert werden:

$$v\_Obj\_abs = v\_Obj\_rel + v\_Fzg$$

Das Verfahren und die Vorrichtung ermöglichen es, auf einfache Weise mit einer einzelnen Kamera einen Abstand zu einem bewegten Objekt zu bestimmen. Es kann hierbei vorgesehen sein, dass das Verfahren zyklisch für weitere Zeitpunkte wiederholt wird. Ferner kann vorgesehen sein, dass das Verfahren für weitere bewegte Objekte im Umfeld des Kraftfahrzeugs 50 durchgeführt wird.

## Bezugszeichenliste

| | |
|---|---|
| 1 | Vorrichtung |
| 2 | Kamera |
| 3 | Auswerteeinrichtung |
| 4 | Recheneinrichtung |
| 5 | Speicher |
| 10 | erste Umfeldabbildung |
| 11 | zweite Umfeldabbildung |
| 30 | Umfeld |
| 31 | Fahrspur |
| 32 | Fahrspurmarkierung |
| 50 | Kraftfahrzeug |
| 51 | Fahrzeugodometrie |
| 52 | Fahrtrichtung |
| 60 | bewegtes Objekt |
| 61 | unbewegtes Objekt |
| 62 | Baum |
| 63 | Hinterrad |
| t1 | erster Zeitpunkt |
| t2 | zweiter Zeitpunkt |
| x | Größe (bewegtes Objekt) |
| y | Größe (unbewegtes Objekt) |
| x'_1 | Bildgröße (bewegtes Objekt, erster Zeitpunkt) |
| x'_2 | Bildgröße (bewegtes Objekt, zweiter Zeitpunkt) |
| y'_1 | Bildgröße (unbewegtes Objekt, erster Zeitpunkt) |
| y'_2 | Bildgröße (unbewegtes Objekt, zweiter Zeitpunkt) |
| k | Bildgrößenverhältnis |
| a_1 | Abstand (unbewegtes Objekt, erster Zeitpunkt) |
| a_2 | Abstand (unbewegtes Objekt, zweiter Zeitpunkt) |
| b_1 | Abstand (bewegtes Objekt, erster Zeitpunkt) |
| b_2 | Abstand (bewegtes Objekt, zweiter Zeitpunkt) |
| b_3 | weiterer Abstand (bewegtes Objekt, weiterer Zeitpunkt) |
| v_Fzg | Fahrzeuggeschwindigkeit |
| v_Obj_rel | Relativgeschwindigkeit (bewegtes Objekt) |
| v_Obj_abs | Absolutgeschwindigkeit (bewegtes Objekt) |
| Δt | Zeitdifferenz |
| Δa | zurückgelegte Wegstrecke |

## Patentansprüche

1. Verfahren zum kamerabasierten Bestimmen eines Abstandes (b_1,b_2) eines bewegten Objektes (60) im Umfeld (30) eines Kraftfahrzeugs (50) zu einer Kamera (2), wobei eine erste Umfeldabbildung (10) des Umfeldes (30) zu einem ersten Zeitpunkt (t1) und eine zweite Umfeldabbildung (11) des Umfelds (30) zu einem nachfolgenden zweiten Zeitpunkt (t2) mittels der Kamera (2) erfasst werden,

   wobei das bewegte Objekt (60) in den erfassten Umfeldabbildungen (10,11) erkannt wird, und wobei mindestens ein unbewegtes Objekt (61) in den erfassten Umfeldabbildungen (10,11) erkannt und in Abhängigkeit einer ausgezeichneten geometrischen Beziehung relativ zum bewegten Objekt (60) in der ersten Umfeldabbildung (10) ausgewählt wird, wobei die ausgezeichnete geometrische Beziehung eine Bedingung bezeichnet, dass das unbewegte Objekt (61) auf Grund einer Nähe zum bewegten Objekt (60) in unmittelbarer Nachbarschaft zu diesem angeordnet ist oder das bewegte Objekt (60) zumindest teilweise berührt,
   wobei ein Bildgrößenverhältnis (k) zwischen einer Bildgröße (x'_1) des bewegten Objekts (60) und einer Bildgröße (y'_1) des unbewegten Objekts (61) in der ersten Umfeldabbildung (10) bestimmt wird,
   wobei eine Bildgröße (y'_2) des unbewegten Objektes (61) in der zweiten Umfeldabbildung (11) bestimmt wird,
   wobei Abstände (a_1,a_2) des unbewegten Objektes (61) zum ersten Zeitpunkt (t1) und zum zweiten Zeitpunkt (t2) und eine Objektgröße (y) des unbewegten Objektes (61) auf Grundlage der bestimmten Bildgrößen (y'_1,y'_2) des unbewegten Objektes (61) und einer Fahrzeuggeschwindigkeit (v_Fzg) bestimmt werden, und wobei Abstände (b_1,b_2) des bewegten Objektes (60) zum ersten Zeitpunkt (t1) und zum zweiten Zeitpunkt (t2) auf Grundlage des bestimmten Bildgrößenverhältnisses (k), der bestimmten Abstände (a_1,a_2) und der bestimmten Objektgröße (y) des unbewegten Objektes (61) bestimmt und bereitgestellt werden.

2. Verfahren nach Anspruch 1, **dadurch gekennzeichnet, dass** eine Objektgröße (x) des bewegten Objektes (60) auf Grundlage des bestimmten Bildgrößenverhältnisses (k) und der bestimmten Objektgröße (y) des unbewegten Objektes (61) bestimmt wird, wobei ein weiterer Abstand (b_3) des bewegten Objektes (60) zu einem späteren weiteren Zeitpunkt ausschließlich auf Grundlage der bestimmten Objektgröße (x) und einer in einer erfassten weiteren Umfeldabbildung bestimmten Bildgröße des bewegten Objektes (60) bestimmt wird.

3. Verfahren nach Anspruch 1 oder 2, **dadurch gekennzeichnet, dass** die Abstände (b_1,b_2) und/oder die Objektgröße (x) des unbewegten Objektes (61) auf Grundlage von gegebenen optischen Eigenschaften der Kamera (2) bestimmt werden, wobei zum Bestimmen von einer Fixfokusoptik mit einem gegebenen Bildabstand ausgegangen wird.

4. Verfahren nach einem der vorangegangenen Ansprüche, **dadurch gekennzeichnet, dass** die ausgezeichnete geometrische Beziehung durch mindestens einen Berührungspunkt von Bildelementen des bewegten Objektes (60) und Bildelementen des unbewegten Objektes in der ersten Umfeldabbildung (10) festgelegt ist oder festgelegt wird.

5. Verfahren nach einem der vorangegangenen Ansprüche, **dadurch gekennzeichnet, dass** eine Relativgeschwindigkeit (v_Obj_rel) des bewegten Objektes (60) zum Kraftfahrzeug (50) auf Grundlage der bestimmten Abstände (b_1,b_2) des bewegten Objektes (60) und einer Zeitdifferenz (Δt) zwischen dem ersten Zeitpunkt (t1) und dem zweiten Zeitpunkt (t2) bestimmt und bereitgestellt wird.

6. Verfahren nach Anspruch 5, **dadurch gekennzeichnet, dass** eine Absolutgeschwindigkeit (v_Obj_abs) des bewegten Objektes (60) bestimmt und bereitgestellt wird, wobei hierzu die bestimmte Relativgeschwindigkeit (v_Obj_rel) und eine Fahrzeuggeschwindigkeit (v_Fzg) des Kraftfahrzeugs (50) zusammenaddiert werden.

7. Vorrichtung (1) zum kamerabasierten Bestimmen eines Abstandes (b_1,b_2) eines bewegten Objektes (60) im Umfeld (30) eines Kraftfahrzeugs (50) zu einer Kamera (2), umfassend:

   die Kamera (2) zum Erfassen des Umfeldes (30), und
   eine Auswerteeinrichtung (3),
   wobei die Kamera (2) derart ausgebildet ist, eine erste Umfeldabbildung (10) des Umfeldes (30) zu einem ersten Zeitpunkt (t1) und eine zweite Umfeldabbildung (11) des Umfelds (30) zu einem nachfolgenden zweiten Zeitpunkt (t2) zu erfassen, und
   wobei die Auswerteeinrichtung (3) derart ausgebildet ist, das bewegte Objekt (60) in den erfassten Umfeldabbildungen (10,11) zu erkennen und ferner mindestens ein unbewegtes Objekt (61) in den erfassten Umfeldabbildungen (10,11) zu erkennen und in Abhängigkeit einer ausgezeichneten geometrischen Beziehung relativ zum bewegten Objekt (60) in der ersten Umfeldabbildung (10) auszuwählen, wobei die ausgezeichnete geometrische Beziehung eine Bedingung bezeichnet, dass das unbewegte Objekt (61) auf Grund einer Nähe zum bewegten Objekt (60) in unmittelbarer Nachbarschaft zu diesem angeordnet ist oder das bewegte Objekt (60) zumindest teilweise berührt, ein Bildgrößenverhältnis (k) zwischen einer Bildgröße (x'_1) des bewegten Objekts (60) und einer Bildgröße (y'_1) des unbewegten Objekts (61) in der ersten Umfeldabbildung (10) zu bestimmen, und
   ferner eine Bildgröße (y'_2) des unbewegten Objektes (61) in der zweiten Umfeldabbildung (11) zu bestimmen, Abstände (a_1,a_2) des unbewegten Objektes (61) zum ersten Zeitpunkt (t1) und zum zweiten Zeitpunkt (t2) und eine Objektgröße (y) des unbewegten Objektes (61) auf Grundlage der bestimmten Bildgrößen (y'_1,y'_2) des unbewegten Objektes (61) und einer Fahrzeuggeschwindigkeit (v_Fzg) zu bestimmen, und
   Abstände (b_1,b_2) des bewegten Objektes (60) zum ersten Zeitpunkt (t1) und zum zweiten Zeitpunkt (t2) auf Grundlage des bestimmten Bildgrößenverhältnisses (k), der bestimmten Abstände (a_1,a_2) und der bestimmten Objektgröße (y) des unbewegten Objektes (61) zu bestimmen und bereitzustellen.

8. Vorrichtung (1) nach Anspruch 7, **dadurch gekennzeichnet, dass** die Auswerteeinrichtung (3) ferner derart ausgebildet ist, eine Objektgröße (x) des bewegten Objektes (60) auf Grundlage des bestimmten Bildgrößenverhältnisses (k) und der bestimmten Objektgröße (y) des unbewegten Objektes (60) zu bestimmen, und einen weiteren Abstand (b_3) des bewegten Objektes (60) zu einem späteren weiteren Zeitpunkt ausschließlich auf Grundlage der bestimmten Objektgröße (x) und einer in einer erfassten weiteren Umfeldabbildung bestimmten Bildgröße des bewegten Objektes (60) zu bestimmen.

9. Vorrichtung (1) nach Anspruch 7 oder 8, **dadurch gekennzeichnet, dass** die Auswerteeinrichtung (3) ferner derart ausgebildet ist, eine Relativgeschwindigkeit (v_Obj_rel) des bewegten Objektes (60) zum Kraftfahrzeug (50) auf Grundlage der bestimmten Abstände (b_1,b_2) des bewegten Objektes (60) und einer Zeitdifferenz (Δt) zwischen dem ersten Zeitpunkt (t1) und dem zweiten Zeitpunkt (t2) zu bestimmen.

10. Kraftfahrzeug (50), umfassend mindestens eine Vorrichtung (1) nach einem der Ansprüche 7 bis 9.

**Claims**

1. Method for the camera-based determination of a distance (b_1,b_2) between a moving object (60) in the surroundings (30) of a motor vehicle (50) and a camera (2), wherein by means of the camera (2) a first surroundings image (10) of the surroundings (30) is captured at a first time (t1) and a second surroundings image (11) of the surroundings (30) is captured at a subsequent second time (t2),

   wherein the moving object (60) is detected in the captured surroundings images (10,11), and wherein at least one stationary object (61) is detected in the captured surroundings images (10,11) and is selected based on a distinguished geometric relationship relative to the moving object (60) in the first surroundings image (10), wherein the distinguished geometric relationship denotes a requirement that the stationary object (61), due to a proximity to the moving object (60), is located in the immediate vicinity thereof or at least partially touches the moving object (60),
   wherein an image size ratio (k) between an image size (x'_1) of the moving object (60) and an image size (y'_1) of the stationary object (61) is determined in the first surroundings image (10),
   wherein an image size (y'_2) of the stationary object (61) is determined in the second surroundings image (11),
   wherein distances (a_1,a_2) from the stationary object (61) at the first time (t1) and at the second time (t2) and an object size (y) of the stationary object (61) are determined on the basis of the determined image sizes (y'_1,y'_2) of the stationary object (61) and a vehicle velocity (v_Fzg), and
   wherein distances (b_1,b_2) from the moving object (60) at the first time (t1) and at the second time (t2) are determined and provided on the basis of the determined image size ratio (k), the determined distances (a_1,a_2), and the determined object size (y) of the stationary object (61).

2. Method according to claim 1, **characterized in that** an object size (x) of the moving object (60) is determined on the basis of the determined image size ratio (k) and the determined object size (y) of the stationary object (61), a further distance (b_3) from the moving object (60) at a later further time being determined exclusively on the basis of the determined object size (x) and an image size of the moving object (60) determined in a captured further surroundings image.

3. Method according to claim 1 or 2, **characterized in that** the distances (b_1,b_2) and/or the object size (x) of the stationary object (61) are determined on the basis of given optical properties of the camera (2), assuming for said determination a fixed-focus lens with a given image distance.

4. Method according to any of the preceding claims, **characterized in that** the distinguished geometric relationship is defined by at least one point of contact between image elements of the moving object (60) and image elements of the stationary object in the first surroundings image (10).

5. Method according to any of the preceding claims, **characterized in that** a relative velocity (v_Obj_rel) of the moving object (60) relative to the motor vehicle (50) is determined and provided on the basis of the determined distances (b_1,b_2) from the moving object (60) and a time difference (Δt) between the first time (t1) and the second time (t2).

6. Method according to claim 5, **characterized in that** an absolute velocity (v_Obj_abs) of the moving object (60) is determined and provided, the determined relative velocity (v_Obj_rel) and a vehicle velocity (v_Fzg) of the motor vehicle (50) being added together for this purpose.

7. Device (1) for the camera-based determination of a distance (b_1,b_2) between a moving object (60) in the surroundings (30) of a motor vehicle (50) and a camera (2), comprising:

   the camera (2) for capturing the surroundings (30), and

an evaluation apparatus (3),

wherein the camera (2) is designed to capture, at a first time (t1), a first surroundings image (10) of the surroundings (30) and, at a subsequent second time (t2), a second surroundings image (11) of the surroundings (30), and

wherein the evaluation apparatus (3) is designed to detect the moving object (60) in the captured surroundings images (10,11) and furthermore to detect at least one stationary object (61) in the captured surroundings images (10,11) and to select it based on a distinguished geometric relationship relative to the moving object (60) in the first surroundings image (10), wherein the distinguished geometric relationship denotes a requirement that the stationary object (61), due to a proximity to the moving object (60), is located in the immediate vicinity thereof or at least partially touches the moving object (60), to determine, in the first surroundings image (10), an image size ratio (k) between an image size (x'_1) of the moving object (60) and an image size (y'_1) of the stationary object (61), and furthermore to determine, in the second surroundings image (11), an image size (y'_2) of the stationary object (61), to determine distances (a_1,a_2) from the stationary object (61) at the first time (t1) and at the second time (t2) and an object size (y) of the stationary object (61) on the basis of the determined image sizes (y'_1,y'_2) of the stationary object (61) and a vehicle velocity (v_Fzg), and

to determine and provide distances (b_1,b_2) from the moving object (60) at the first time (t1) and at the second time (t2) on the basis of the determined image size ratio (k), the determined distances (a_1,a_2), and the determined object size (y) of the stationary object (61).

8. Device (1) according to claim 7, **characterized in that** the evaluation apparatus (3) is furthermore designed to determine an object size (x) of the moving object (60) on the basis of the determined image size ratio (k) and the determined object size (y) of the stationary object (60), and to determine a further distance (b_3) from the moving object (60) at a later further time exclusively on the basis of the determined object size (x) and an image size of the moving object (60) determined in a captured further surroundings image.

9. Device (1) according to claim 7 or 8, **characterized in that** the evaluation apparatus (3) is furthermore designed to determine a relative velocity (v_Obj_rel) of the moving object (60) relative to the motor vehicle (50) on the basis of the determined distances (b_1,b_2) from the moving object (60) and a time difference (Δt) between the first time (t1) and the second time (t2).

10. Motor vehicle (50), comprising at least one device (1) according to any of claims 7 to 9.

**Revendications**

1. Procédé de détermination, sur la base d'une caméra, d'une distance (b_1, b_2) d'un objet mobile (60) dans l'environnement (30) d'un véhicule automobile (50) par rapport à une caméra (2), dans lequel une première représentation d'environnement (10) de l'environnement (30) à un premier instant (t1) et une seconde représentation d'environnement (11) de l'environnement (30) à un second instant suivant (t2) sont saisies par le biais de la caméra (2),

dans lequel l'objet mobile (60) est reconnu dans les représentations d'environnement (10, 11) saisies, et dans lequel au moins un objet immobile (61) est reconnu dans les représentations d'environnement (10, 11) saisies et sélectionné en fonction d'une excellente relation géométrique par rapport à l'objet mobile (60) dans la première représentation d'environnement (10), dans lequel l'excellente relation géométrique désigne une condition selon laquelle l'objet immobile (61) est agencé à proximité immédiate de l'objet mobile en raison d'une proximité de l'objet mobile (60) ou est au moins partiellement en contact avec l'objet mobile (60), dans lequel un rapport de taille d'image (k) entre une taille d'image (x'_1) de l'objet mobile (60) et une taille d'image (y'_1) de l'objet immobile (61) dans la première représentation d'environnement (10) est déterminé, dans lequel une taille d'image (y'_2) de l'objet immobile (61) dans la seconde représentation d'environnement (11) est déterminée, dans lequel des distances (a_1, a_2) de l'objet immobile (61) au premier instant (t1) et au second instant (t2) et une taille d'objet (y) de l'objet immobile (61) sont déterminées sur la base des tailles d'image (y'_1, y'_2) déterminées de l'objet immobile (61) et d'une vitesse de véhicule (v_Fzg), et dans lequel des distances (b_1, b_2) de l'objet mobile (60) au premier instant (t1) et au second instant (t2) sont déterminées et mises à disposition sur la base du rapport de taille d'image (k) déterminé, des distances (a_1, a_2) déterminées et de la taille d'objet (y) déterminée de l'objet immobile (61).

2. Procédé selon la revendication 1, **caractérisé en ce qu'**une taille d'objet (x) de l'objet mobile (60) est déterminée sur la base du rapport de taille d'image (k) déterminé et de la taille d'objet (y) déterminée de l'objet immobile (61), dans lequel une autre distance (b_3) de l'objet mobile (60) est déterminée à un autre instant ultérieur exclusivement sur la base de la taille d'objet (x) déterminée et d'une taille d'image de l'objet mobile (60) déterminée dans une autre représentation d'environnement saisie.

3. Procédé selon la revendication 1 ou 2, **caractérisé en ce que** les distances (b_1, b_2) et/ou la taille d'objet (x) de l'objet immobile (61) sont déterminées sur la base de propriétés optiques données de la caméra (2), dans lequel, pour la détermination, on part d'une optique à focale fixe avec une distance d'image donnée.

4. Procédé selon l'une des revendications précédentes, **caractérisé en ce que** l'excellente relation géométrique est ou sera définie par au moins un point de contact entre des éléments d'image de l'objet mobile (60) et des éléments d'image de l'objet immobile dans la première représentation d'environnement (10).

5. Procédé selon l'une des revendications précédentes, **caractérisé en ce qu'**une vitesse relative (v_Obj_rel) de l'objet mobile (60) par rapport au véhicule automobile (50) est déterminée et mise à disposition sur la base des distances (b_1, b_2) déterminées de l'objet mobile (60) et d'une différence de temps (Δt) entre le premier instant (t1) et le second instant (t2).

6. Procédé selon la revendication 5, **caractérisé en ce qu'**une vitesse absolue (v_Obj_abs) de l'objet mobile (60) est déterminée et mise à disposition, dans lequel la vitesse relative (v_Obj_rel) déterminée et une vitesse de véhicule (v_Fzg) du véhicule automobile (50) sont additionnées à cet effet.

7. Dispositif (1) de détermination, sur la base d'une caméra, d'une distance (b_1, b_2) d'un objet mobile (60) dans l'environnement (30) d'un véhicule automobile (50) par rapport à une caméra (2), comprenant :

la caméra (2) pour saisir l'environnement (30), et un dispositif d'évaluation (3), dans lequel la caméra (2) est conçue de manière à saisir une première représentation d'environnement (10) de l'environnement (30) à un premier instant (t1) et une seconde représentation d'environnement (11) de l'environnement (30) à un second instant (t2) suivant, et dans lequel le dispositif d'évaluation (3) est conçu de manière à reconnaître l'objet mobile (60) dans les représentations d'environnement (10, 11) saisies et à reconnaître en outre au moins un objet immobile (61) dans les représentations d'environnement (10, 11) saisies et à le sélectionner en fonction d'une excellente relation géométrique par rapport à l'objet mobile (60) dans la première représentation d'environnement (10), dans lequel l'excellente relation géométrique désigne une condition selon laquelle l'objet immobile (61) est agencé à proximité immédiate de l'objet mobile (60) en raison d'une proximité avec celui-ci ou est en contact au moins partiellement avec l'objet mobile (60), déterminer un rapport de taille d'image (k) entre une taille d'image (x'_1) de l'objet mobile (60) et une taille d'image (y'_1) de l'objet immobile (61) dans la première représentation d'environnement (10), et déterminer en outre une taille d'image (y'_2) de l'objet immobile (61) dans la seconde représentation d'environnement (11), déterminer des distances (a_1, a_2) de l'objet immobile (61) au premier instant (t1) et au second instant (t2) et une taille d'objet (y) de l'objet immobile (61) sur la base des tailles d'image (y'_1, y'_2) déterminées de l'objet immobile (61) et d'une vitesse de véhicule (v_Fzg), et déterminer et mettre à disposition des distances (b_1, b_2) de l'objet mobile (60) au premier instant (t1) et au second instant (t2) sur la base du rapport de taille d'image (k) déterminé, des distances (a_1, a_2) déterminées et de la taille d'objet (y) déterminée de l'objet immobile (61).

8. Dispositif (1) selon la revendication 7, **caractérisé en ce que** le dispositif d'évaluation (3) est en outre conçu de manière à déterminer une taille d'objet (x) de l'objet mobile (60) sur la base du rapport de taille d'image (k) déterminé et de la taille d'objet (y) déterminée de l'objet immobile (60), et à déterminer une autre distance (b_3) de l'objet mobile (60) à un autre instant ultérieur exclusivement sur la base de la taille d'objet (x) déterminée et d'une taille d'image de l'objet mobile (60) déterminée dans une autre représentation d'environnement saisie.

9. Dispositif (1) selon la revendication 7 ou 8, **caractérisé en ce que** le dispositif d'évaluation (3) est en outre conçu de manière à déterminer une vitesse relative (v_Obj_rel) de l'objet mobile (60) par rapport au véhicule automobile (50) sur la base des distances (b_1, b_2) déterminées de l'objet mobile (60) et d'une différence de temps (Δt) entre le premier instant (t1) et le second instant (t2).

10. Véhicule automobile (50), comprenant au moins un dispositif (1) selon l'une des revendications 7 à 9.

50

1

2

10;11

4

b_1;b_2;b_3

51

5

v_Fzg

3

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 106197382 B